# EUROPEAN PATENT SPECIFICATION

(11) **EP 1 399 389 B1**
(45) Date of publication and mention of the grant of the patent: **24.08.2011**
(21) Application number: 02751074.2
(22) Date of filing: 26.06.2002
(51) Int. Cl.: C03B 5/12, C03B 3/02

(54) **PROCESS AND APPARATUS FOR MAKING MINERAL FIBRES**
VERFAHREN UND VORRICHTUNG ZUR HERSTELLUNG VON MINERALFASERN
PROCEDE ET APPAREIL DE FABRICATION DE FIBRES MINERALES

(30) Priority: 27.06.2001 GB 0115760; 27.06.2001 US 301754 P; 03.12.2001 EP 01310090
(43) Date of publication of application: 24.03.2004
(73) Proprietor: Rockwool International A/S, 2640 Hedehusene (DK)
(72) Inventor: JENSEN, Leif, Moeller, DK-4000 Roskilde (DK); ANDREASEN, Ole, DK-3520 Farum (DK); HOYER, Hans, DK-4000 Roskilde (DK); FRICKMANN, Trine, DK-3840 Fredensborg (DK); BOELLUND, Lars, DK-3550 Slangerup (DK)
(74) Representative: Samuels, Lucy Alice
(86) International application number: PCT/EP2002/007062
(87) International publication number: WO 2003/002469

(56) References cited:
- WO-A-99/50196
- DE-A- 19 707 891
- US-A- 4 365 984
- US-A- 4 877 449
- "PYROFLUX PROCESS GLASS PRODUCTION ECONOMIC ESTIMATES" BOLETIN DE LA SOCIEDAD ESPANOLA DE CERAMICA Y VIDRIO, SOCIEDAD ESPANOLA DE CERAMICA Y VIDRIO, MADRID, ES, vol. 31, no. 3, 1 May 1992 (1992-05-01), pages 256-257, XP000296434 ISSN: 0366-3175

## Description

This invention relates to the production of mineral fibres by burning combustible material in the presence of inorganic particulate material and thereby forming a melt, and then fiberising this melt to form the fibres.

When the fibres are glass fibres, the melt is typically formed by adding inorganic particulate material to a preformed pool of melt in an electric or other tank furnace. This is appropriate having regard to the chemistry, physical properties and economics of the manufacture of glass fibres, typically having a chemical analysis, by weight of oxides, of above 10% Na₂O + K₂O, below 3% iron as FeO, below 20% CaO + MgO, above 50% SiO₂ and below 5% Al₂O₃, and often also some boron. However this system is not practical or economic, having regard to the melt temperature, other physical properties and economics, for the manufacture of rock, stone or slag fibres, typically having an analysis, by weight of oxides, of below 10% Na₂O+ K₂O,above 20% CaO + MgO, above 3% iron as FeO, and below 50% SiO₂ and, often, above 10% Al₂O₃, and usually boron in, at most, trivially small amounts.

The normal way of producing the melt for slag, stone or rock fibres is by means of a shaft furnace in which a self-supporting stack of inorganic particulate material is heated by combustion of combustible material in the furnace. The stack gradually melts and is replenished from on top, with melt draining down the stack and out from the bottom of the furnace. The normal furnace for this purpose is a cupola furnace.

It is necessary for the stack to be self-supporting and permeable to the combustion gases, which are generally generated by combustion of carbonaceous material in the stack. It is therefore necessary that everything in the stack is relatively coarse (in order that the stack is permeable) and has high physical strength and does not collapse until combustion or melting is well advanced. In practice this means that the carbonaceous material is coke and the particulate material is either coarsely crushed rock, stone or slag or is in the form of briquettes formed from fine particulate material.

Accordingly, if the material which is available is only available in finely divided form, it is necessary to incur the expense and inconvenience of forming it into briquettes. Briquetting usually uses sulphur-containing materials as binder, such as Portland cement with gypsum, and this means that the effluent is liable to have a high sulphur content, which has to be treated. The gas would typically contain H₂S and CO if it is not subjected to after-burning.

For this, and other reasons, it is generally necessary to subject the effluent gases from the cupola furnace to an after-burning stage, in order that the gases which are discharged into the atmosphere are environmentally satisfactory, and it would be desirable to be able to avoid the need for using an after-burner.

The cupola or other stack furnace system also has the disadvantage that conditions in the furnace always tend to be sufficiently reducing that some of the iron is reduced to metallic iron. This necessitates separating metallic iron from the melt, reduces wool production, leads to the provision of iron waste and also tends to incur the risk of corrosion in the zone containing iron and slag.

Another disadvantage is that the process does not have high thermal efficiency.

Despite these disadvantages, the process using a cupola or other stack furnace has been widely adopted throughout the world for the manufacture of rock, stone or slag fibres, e.g., having the analysis given above.

Nevertheless, it would clearly be desirable, and has been desirable for a long time, to devise a system which avoids some or all of these disadvantages. Thus the invention aims to provide a system which has high thermal efficiency and which provides an environmentally satisfactory effluent, preferably without the use of an after-burner or other special pollution-controlling effluent treatment. It is also desirable that the system does not result in reduction of iron and does not necessitate briquetting.

Almost twenty years ago US 4,365,984 proposed the manufacture of slag, stone or rock fibres by an entirely different process. This involves suspending powdered coal in preheated combustion air and combusting the suspended coal in the presence of suspended particulate mineral material in a circulating combustion chamber, i.e., a combustion chamber in which the suspended particulate materials and air circulate in a system which is or approaches a cyclone circulation system.

This process results in the formation of a mineral melt and hot exhaust gases. The melt is collected in a tank and a stream of melt is then fiberised by centrifugal fiberising apparatus. The hot exhaust gases are utilised for preheating the combustion air, before it is mixed with the coal, by heat exchange between air and the exhaust gases. In this process, the combustion air which is mixed with the coal and the particulate material is described as having a temperature between 430 and 650°C and the flame temperature in the furnace is described as being between 1500 and 1900°C. Preferably some or all of the inorganic particulate material is provided as part of the suspended coal, as a result of using waste coal tailings from a fine coal washing circuit.

Although the process would, in theory, be operable, and would avoid the need of briquetting and would probably eliminate the risk of reduction of iron, the process as described is clearly subject to major environmental effluent problems and is of low efficiency. Accordingly, in practice it is neither economically nor environmentally competitive with the conventional shaft furnace processes and so the circulating combustion chamber technology has not been developed for the manufacture of slag or rock fibres. This is despite the fact that there have been numerous publications of circulating combustion chamber technology for various mineral products in the intervening twenty years.

One particular environmental effluent problem which is likely to arise is the presence of NOx in the exhaust gases. The reducing conditions in a cupola tend to minimise this problem but the less reducing conditions, and in particular the described oxidising conditions, that would prevail in the circulating combustion chamber are liable, at the high temperatures of the process, to result in the effluent gases containing a significant amount of NOx, and this would create a major environmental problem.

It would be desirable to be able to avoid this and other environmental problems of processes using nonreducing conditions in the combustion chamber, and to avoid the various technical and economic and environmental problems associated with cupola and other shaft furnaces.

According to the invention, we provide a method for making mineral fibres comprising (I) making a mineral melt by a process comprising providing a carbonaceous fuel and particulate mineral material and combusting the fuel thereby forming a mineral melt and hot exhaust gases, separating the hot exhaust gases from the melt and collecting the melt, and (II) flowing a stream of the collected melt to a centrifugal fiberising apparatus and forming mineral fibres by centrifugallyfiberising the stream of melt, characterised in that the carbonaceous fuel is powdered and the process includes the steps of suspending the powdered carbonaceous fuel in preheated combustion air and combusting the suspended carbonaceous fuel to form a flame, suspending the particulate mineral material which has been preheated to at least 700°C in the flame and melting the mineral material in a circulating combustion chamber (25, 28) contacting the exhaust gases from the melt in a cyclone preheater (22) under NOx-reducing conditions with the particulate mineral material which is to be melted and thereby reducingNOx in the exhaust gases and preheating the particulate material to at least 700°C, wherein the particulate mineral material comprises waste bonded mineral wool, and providing the preheated combustion airby heat exchange of air with the exhaust gases from the cyclone preheater (22).

The invention includes the described process of making the melt wherein the collected melt is then taken as a stream to a centrifugal fiberising apparatus, and is fiberised to fibres which are then collected, for instance as a web and converted into bonded or other mineral wool products in conventional manner. The composition of the melt is generally such that the fibres are of the type which are conventionally described as slag, stone or rock fibres.

The invention also includes the plant which is used for making the fibres, such as the means for forming the flame and for feeding the particulate mineral material into the flame and the circulating combustion chamber for this, and the recycling system including the cyclone preheater.

It is easily possible to operate the process so that it is economically and environmentally advantageous compared to conventional processes using a shaft furnace. In particular, it is possible to operate the process in a cost-effective manner to provide melt which is free of reduced iron and exhaust gases which are substantially free of NOx and other undesirable impurities or which have a level of contamination which is sufficiently low that it is environmentally acceptable.

The NOx reducing conditions are generated by including in the cyclone preheater nitrogenous material which will reduce NOx under the conditions prevailing in the preheater. This includes providing waste bonded mineral wool as a component of the particulate mineral material. Nitrogenous material may also be included in the hot exhaust gas which is fed to the preheater or may be added direct to the preheater.

The nitrogenous material which is included in the preheater cyclone is preferably ammonia or ammonium compound, an amine or urea, wherein the urea may be free or, more preferably, is a resinous product such as a urea formaldehyde or phenol urea formaldehyde resin. It is required that NOx reducing conditions are generated by including in the particulate material waste bonded mineral wool which is fed to the preheater cyclone, wherein the waste bonded mineral wool contains a urea resin (usually phenol urea resin) and/or ammonia or an ammonium compound (for instance as a buffering agent for resin in the waste wool). Thus, by the invention, it is possible simultaneously to utilise waste material and to react it under appropriate conditions so as to reduce a significant amount of the NOx in the exhaust gases to nitrogen.

The amount of ammonia or ammonia derivative or other NOx-reducing compound is preferably 1 to 4 (preferably 1-2 or, especially, 1-1.7) moles per mole NOx and the reaction is preferably conducted at a temperature of 800°C to 1050°C. The reaction residence time is preferably at least 0.3 seconds and most preferably at least 1 second. Typically this can be the residence time of the particulate mineral material in the cyclone preheater, and/or the ducting, until the exhaust gas is cooled below reaction temperature, e.g., below 800°C. Under these conditions, preferably with a temperature in the range 800 to 1050°C, substantially all the NOx is reduced to nitrogen, even though the atmosphere in the preheater is preferably oxidising.

Thus, according to another preferred feature of the invention the gaseous atmosphere in the cyclone preheater contains excess oxygen, preferably in an amount of at least 1% or 2% and most preferably at least 4%, for instance up to 8% by volume by weight of the gaseous atmosphere. Despite the oxidising nature of the atmosphere, NOx is reduced by the added ammonia or other nitrogenous compound under the conditions defined for the preheater.

The preheater can thus simultaneously operate as a NOx reducer and an oxidising after-burner to burn pollutants such as hydrogen sulphide and carbon monoxide from the circulating combustion chamber.

Preferably the exhaust gases which are separated from the melt and which are then fed to the cyclone preheater contain less oxygen than the amount which is present in the cyclone preheater and so preferably air or other source of oxygen is added to the exhaust gases either in the preheater or between the melt and the preheater.

Preferably the combustion in the circulating combustion chamber is near stoichiometric or even substoichiometric. As a result of this, the amount of NOx generated during the combustion is minimised. The ratio of oxygen to combustible material is generally from 0.8 to 1, most preferably 0.85 to 0.99, often around 0.92 to 0.97.

Thus, in preferred process and apparatus according to the invention the combustion of the carbonaceous particulate material and the melting of the particulate mineral material is conducted under slightly substoichiometric conditions and the exhaust gas from this is then adjusted to be slightly oxidising and the exhaust gases are then, in a single operation, both subject to oxidising after burning and to NOx reduction, in a cyclone preheater.

The temperature of the exhaust gases when they are separated from the melt is preferably 1400 to 1700°C, often 1500 to 1600°C. The temperature of the gases entering the cyclone preheater is generally in the range 1000 to 1500°C. When, as is normal, this temperature is less than the temperature of the gas when it leaves the melt, the reduction in temperature can be achieved by dilution with air and/or liquid ammonia. The proportions of the inflowing exhaust gas and the particulate mineral material should be such that the mineral material is preheated to the desired temperature, typically 700° or 800 to 1050°C, in the cyclone preheater.

The exhaust gases from the preheater cyclone are used for preheating the air for the combustion of the carbonaceous material and generally the gases have a temperature in the range 800 to 900°C when they emerge from the preheater cyclone. They are preferably used for heat exchange with the incoming combustion air so as to preheat that air to a temperature of at least 500°C and preferably 600 to 900, most preferably around 700 to 800°C.

The carbonaceous material which is used as the fuel can be any particulate carbonaceous material that has a suitable calorific value. This value can be relatively low, for instance as low as 10000kJ/kg or even as low as 5000kJ/kg. Thus it may be, for instance, dried sewage sludge or paper waste. Preferably it has higher calorific value and may be spent pot liner from the aluminium industry, coal containing waste such as coal tailings, or powdered coal.

The fuel and air is preferably such that the adiabatic flame temperature (i.e., the temperature that would be achieved from the fuel and air if there is no exchange of enthalpy with particulate mineral material or other surroundings) is in the range 1800°C to 2500°C or more, preferably in the range 2000 to 2500°C.

It is desirable to start the combustion of the carbonaceous material in the preheated air before adding the preheated particulate material into the flame so as to allow the flame temperature to become relatively high before the cooler particulate mineral material is added, since otherwise efficiency may be reduced significantly. Preferably the flame temperature is at least about 1000°C and preferably at least 1200°C before the preheated mineral material is added to it. However if the flame temperature is too high there will be increased production of NOx and so preferably the flame temperature is not above 1500°C or 1600°C at the time when the particulate mineral material is added.

In general, materials and conditions are preferably such that the maximum temperature in the circulating combustion chamber and in the gases emerging from it is not more than 1600°C.

The invention is described below by reference to the accompanying drawings in which
Figure 1 is a flow-diagram showing one form of apparatus and method according to the invention and
Figure 2 is a diagram illustrating an alternative arrangement to replace the combustion chamber 25 and tank 8 in Figure 1.

Powdered coal from a screw feed 1 or other feeder is injected into preheated combustion air from duct 2 using an injector 3.

The powdered coal in screw feed 1 may be coal fines but preferably some, and usually at least 50% and preferably at least 80% and usually all of the coal is made by milling lump coal, for instance using a ball mill 4, wherein the lump coal may be supplied from a silo 5. The coal, whether it is supplied initially as fines or lump, may be good quality coal or may be waste coal containing a high inorganic content, for instance 5 to 50% inorganic with the balance being carbon. Preferably the coal is mainly or wholly good quality coal for instance bituminous or sub-bituminous coal (ASTM D388 1984) and contains volatiles which promote ignition.

The coal or other carbonaceous fines which are injected into the preheated combustion air preferably have a particle size in the range from 50 to 1000µm, preferably about 50-200, generally about 70µm average size, with the range being 90% below 100µm.

The preheated combustion air preferably has a temperature of from 500 to 800°C, most preferably 700°C at a time when it is contacted with the powdered coal.

The resultant stream of coal suspended in air passes along duct 24 typically at a velocity of 20-40m/s, and enters a circulating combustion chamber 25. One or more gas burners 6 may be provided at convenient places, for instance as shown in the flow diagram and/or in duct 24, to initiate combustion if this is necessary.

Particulate inorganic material is supplied by feeder 7 into the stream of powdered coal suspended in air in the duct 24.

The pressure in the combustion chamber 25 is usually higher than the pressure in the cyclone 22 and so it is necessary for the feeder 7 to be constructed to insure that the solids flow downwardly despite the increase in pressure. For instance the feeder 7 may comprise a screw feed which discharges through a weighted pressure valve or it may comprise a fluidised bed valve.

It is necessary to ensure that combustion of the coal has initiated before the particulate inorganic material is added, as otherwise inferior and inefficient combustion may occur. In practice the temperature of the flame is generally at least 1200°C and preferably not more than 1500°C at the point where the particulate material is fed into the flame.

The particulate inorganic material is usually fed into the flame quite close to the circulating combustion chamber 25. In practice therefore the feeder 7 is usually close to the inlet to the chamber 25 and it may even be direct into the chamber 25.

It is not essential to have the horizontal duct 24 for the establishment of the flame since it is possible, by appropriate design of the chamber inlets, to inject the coal and preheated air direct into the chamber. It is also possible to feed the particulate material direct into the chamber at a position such that the flame temperature is sufficiently high before the mineral particulate material contacts the flame.

The circulating combustion chamber 25 is of the type which is frequently referred to as a cyclone furnace. Preferably it is water cooled. The construction of suitable cyclone furnaces is described in various patents including US 3,855,951, 4,135,904, 4,553,997, 4,544,394, 4,957,527, 5,114,122 and 5,494,863.

Within the circulating combustion chamber 25, combustion of the particulate coal continues and the particulate mineral material is converted to melt while suspended in air. Melt and particulate material may be thrown on to the walls of the chamber and will flow down the chamber, predominantly as melt.

The circulating chamber 25 can be a horizontal or inclined cyclone but often is vertical. It may lead downwardly into a tank for collecting melt. Preferably the chamber opens direct into the tank without going through a conical or other restricted exit duct of the type which is conventional in many systems, since providing a conical duct as the exit has no advantage and impedes flow from the base of the chamber.

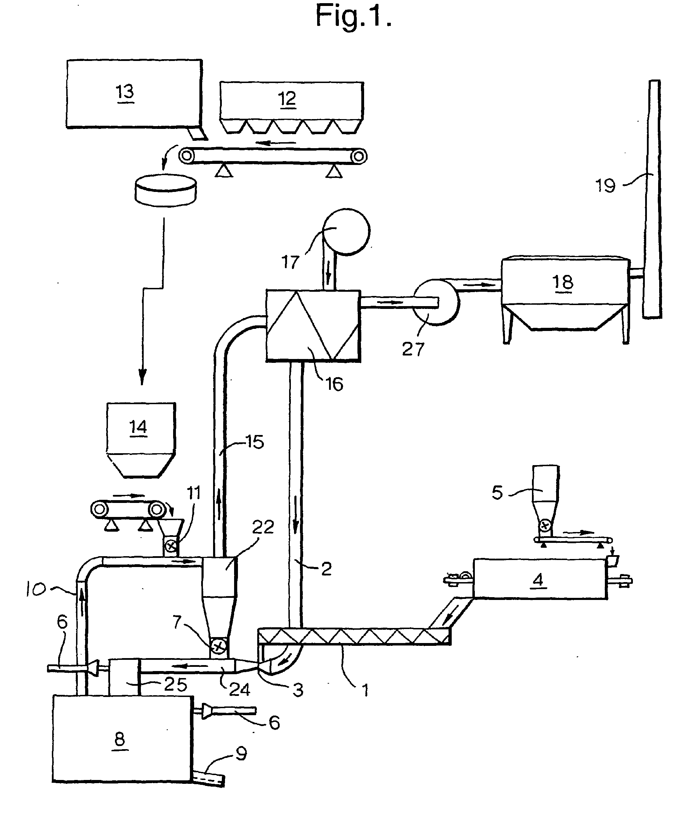

The tank can be in the base of the chamber (for instance as described in US 4,553,997) or it can be a settling tank 8 of considerably enhanced volume, as shown in Figure 1. The settling tank 8 should have sufficient gas volume to allow for precipitation of the melt droplets from the exhaust gas and sufficient melt volume to ensure dissolution of particles, which may only be partly melted, and for homogenisation of the melt. There may be a gas burner 6 or other means for applying extra energy to the settling tank if necessary, for instance to raise the temperature of the exhaust gases, especially during start up.

Melt is run off from the tank, when appropriate, through gutter 9 as a stream and may then be subjected to fiberisation in conventional manner, for instance using a cascade spinner or a spinning cup or any other conventional centrifugal fiberising process. Alternatively it may be run off to some other manufacturing process, e.g., a casting process.

Exhaust gases free of melt are taken from the circulating combustion chamber 25 or from the settling tank 8 into which the chamber discharges. They are taken direct from this chamber through duct 10.

Most or all of the particulate material which is to be melted is preheated by the exhaust gases, typically by being fed in particulate form into the flowing stream of exhaust gas in duct 10 by the feed 11, and the resultant suspension in gas is then passed into the preheater cyclone 22.

The particle size of the mineral material which is fed into the exhaust gases by the feed 11 is preferably in the range 0 to 10mm, usually 0 to 4mm, preferably 0 to 2mm.

The rate of flow of the exhaust gas when the particulate material is suspended in them is generally in the range 10 to 40m/s. He velocities refer to the dimension of the main tube, but the velocities may further be increased just at the feeding point by inserting a venturi section, whereby the velocity may reach values of 100m/s or even more. The particulate material may be fed into the exhaust gas as it approaches the cyclone preheater, or in the cyclone preheater.

The particulate material which is fed in through feed 11 is supplied from hoppers 12 and 13, wherein hopper 13 is particularly important because it contains waste particulate material which contains a source of nitrogen, such as bonded mineral wool wherein the bonding agent is a urea resin. The various materials from hoppers 12 and 13, with additional pulverisation in a ball mill or other mill if necessary, are then blended and fed into a silo 14 and from this they are continuously discharged into the feed 11.

The exhaust gases in duct 10 approaching feed 11 will usually have been cooled down by dilution with air and/or ammonia (not shown) to a temperature of 1200°C to 1500°C suitable for preheating the particulate material in the cyclone 22 to a temperature in the range 700 to 1000°C, generally around 800°C.

These exhaust gases usually leave the cyclone 22 at a temperature in the range 800 to 1000°C, preferably around 900°C. At these temperature, there will be selective non-catalytic reduction of NOx predominantly to nitrogen, with the result that the exhaust gases from the cyclone 22, which leave through duct 15, will have a satisfactorily low NOx content and will preferably be substantially free of NOx.

They then pass through a heat exchanger 16 by which there is indirect heat exchange with combustion air from ventilator 17, thus generating the desired stream of preheated combustion air through duct 2. The waste gas is vented through ventilator 27, and filter 18 to stack 19.

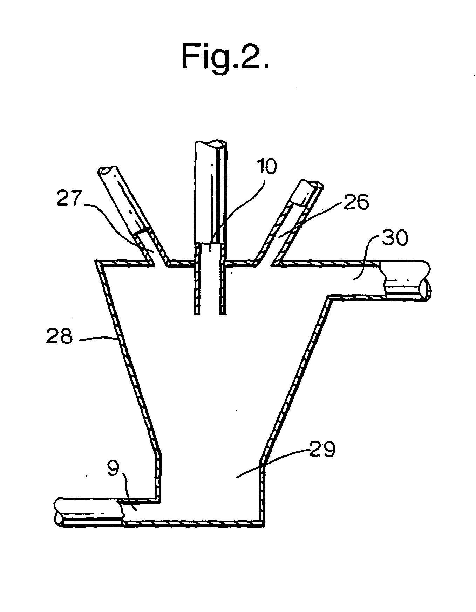

In the modification illustrated diagramatically in Figure 2, the chamber 25 and tank 8 is replaced by a water cooled conical cyclone combustion chamber 28 having a relatively small collecting zone 29 at its base leading to a controllable gutter 9 for the discharge of melt. There is a tangential inlet 30 into the cyclone for the introduction of powdered coal or other particulate fuel and preheated air direct from injector 3 (in which event the flame is established within the cyclone 28) or from a duct 24 (in which event the flame will be established, at least partly, before entering the inlet 30). The feeder 7 discharges the preheated inorganic particulate material through one or more inlets 26 and 27 positioned in the cyclone chamber 28 such that the flame is established to an adequate temperature before it meets the inorganic material. Exhaust gas is taken off from the cyclone through outlet 10.

## Claims

1. A method for making mineral fibres comprising:
(I) making a mineral melt by a process comprising providing a carbonaceous fuel and particulatemineral material and combusting the fuel thereby forming a mineral melt and hot exhaust gases,
separating the hot exhaust gases from the melt and collecting the melt, and
(II) flowing a stream of the collected melt to a centrifugal fiberising apparatusand forming mineral fibres by centrifugally fiberising the stream of melt, **characterised in that**
the carbonaceous fuel is powdered and the process includes the steps of suspending the powdered carbonaceous fuel in preheated combustion air and combusting the suspended carbonaceous fuel to form a flame,
suspending the particulate mineral material which has been preheated to at least 700°C in the flame and melting the mineral material in a circulating combustion chamber (25, 28)
contacting the exhaust gases from the melt in a cyclone preheater (22) under NOx-reducing conditions with the particulate mineral material which is to be melted and thereby reducing NOx in the exhaust gases and preheating the particulate material to at least 700°C, wherein the particulate mineral material compriseswaste bonded mineral wool, and
providing the preheated combustion air by heat exchange of air with the exhaust gases from the cyclone preheater (22).

2. A method according to claim 1 in which the atmosphere in the cyclone preheater (22) contains oxygen.

3. A method according to claim 1 or claim 2 in which the combustion is conducted under substoichiometric conditions.

4. A method according to any preceding claim in which NOx reduction is achieved in the preheater (22) by reaction at a temperature of 700°C to 1050°C.

5. A method according to any preceding claim in which the circulating combustion chamber is a conical cyclone combustion chamber having an axial outlet for exhaust gas from its top and an inlet for the powdered fuel and the preheated air, and/or the flame, non-radially into the top of the cyclone and an outlet for melt from its base.

6. A method according to any preceding claim in which the preheated particulate mineral material is fed direct into the combustion chamber and is suspended in the flame in the combustion chamber.

7. A method according to any preceding claim wherein the waste bonded mineral wool contains a urea resin as a bonding agent.

8. A method according to any preceding claim wherein the mineral fibres are stone fibres having an analysis, by weight of oxide of below 10% Na₂O +K₂O, above 20% CaO + MgO, above 3% iron measured as FeO and below 50% SiO₂.

9. A method according to any preceding claim in which said exhaust gases enter the cyclone preheater at a temperature which is less than the temperature at the time they are separated from said mineral melt and which lesser temperature is in the range of 1000 to 1500°C.

10. A method according to claim 9 in which the reduction of the temperature of the exhaust gases from the first temperature to the lesser temperature is effected by dilution of said exhaust gases with at least one of air and liquid ammonia.

11. Apparatus suitable for conducting the method according to any preceding claim comprising
means (1, 2, 3, 24, 30) for suspending powdered carbonaceous fuel in preheated combustion air and combusting the suspended carbonaceous fuel to form a flame,
means (7, 26, 27) for suspending in the flame particulate mineral material which has been preheated to at least 700°C
means for including in the particulate mineral material waste bonded mineral wool,
a circulating combustion chamber (25, 28) in which melting of the particulate material in the flame is conducted thereby forming a mineral melt and hot exhaust gases,
means (8, 28, 9, 10) for separating the hot exhaust gases and the melt and collecting the melt,
means (11, 22) for contacting the exhaust gases from the melt in a cyclone preheater (22) under NOx-reducingconditions with the particulate mineral material whichis to be melted and thereby reducing NOx in the exhaust gases and preheating the particulate material to at least 700°C,
means (15, 16, 2) for providing the preheated combustion air by heat exchange of air with the exhaust gases from the cyclone preheater (22), and
a centrifugal fiberising apparatus positioned to receive and fiberise the melt.

## Patentansprüche

1. Verfahren zum Herstellen von Mineralfasern, das Folgendes umfasst:
(I) Herstellen einer Mineralschmelze durch einen Prozess, der das Bereitstellen eines kohlenstoffhaltigen Brennstoffs und von partikelförmigem Mineralmaterial und das Verbrennen des Brennstoffs, wodurch eine Mineralschmelze und heiße Abgase gebildet werden, umfasst,
Trennen der heißen Abgase von der Schmelze und Auffangen der Schmelze, und
(II) Fließen eines Stroms der aufgefangenen Schmelze zu einer Zentrifugal-Zerfaserungsvorrichtung und Bilden von Mineralfasern durch Zentrifugalzerfasern des Stroms von Schmelze, **dadurch gekennzeichnet, dass**
der kohlenstoffhaltige Brennstoff pulverisiert ist und der Prozess die Schritte des Suspendieren des pulverisierten kohlenstoffhaltigen Brennstoffs in vorgeheizter Verbrennungsluft und das Verbrennen des suspendierten kohlenstoffhaltigen Brennstoffs, um eine Flamme zu bilden, umfasst,
Suspendieren des partikelförmigen Mineralmaterials, das auf mindestens 700 °C in der Flamme vorgeheizt wurde, und Schmelzen des Mineralmaterials in einer Zirkulations-Verbrennungskammer (25, 28)
Kontaktieren der Abgase von der Schmelze in einer Zyklon-Vorheizvorrichtung (22) unter NOx-reduzierenden Verhältnissen mit dem zu schmelzenden partikelförmigen Mineralmaterial und **dadurch** Reduzieren von NOx in den Abgasen und Vorheizen des partikelförmigen Materials auf mindestens 700 °C, wobei das partikelförmige Mineralmaterial durch Abfall gebundene Mineralwolle umfasst, und
Bereizstellen der vorgeheizten Verbrennungsluft durch Wärmeaustausch von Luft mit den Abgasen von der Zyklon-Vorheizvorrichtung (22).

2. Verfahren nach Anspruch 1, wobei die Atmosphäre in der Zyklon-Vorheizvorrichtung (22) Sauerstoff enthält.

3. Verfahren nach Anspruch 1 oder Anspruch 2, wobei die Verbrennung unter unterstöchiometrischen Verhältnissen durchgeführt wird.

4. Verfahren nach einem der vorangehenden Ansprüche, wobei die NOx-Reduktion in der Vorheizvorrichtung (22) durch Reaktion bei einer Temperatur von 700 °C bis 1050 °C erreicht wird.

5. Verfahren nach einem der vorangehenden Ansprüche, wobei es sich bei der Zirkulations-Verbrennungskammer um eine konische Zyklonverbrennungskammer mit einem axialen Auslass für Abgase aus ihrem oberen Ende und einem Einlass für den pulverisierten Brennstoff und die vorgeheizte Luft und/oder die Flamme nichtradial in das obere Ende des Zyklons und einem Auslass für Schmelze aus ihrem Boden handelt.

6. Verfahren nach einem der vorangehenden Ansprüche, wobei das vorgeheizte partikelförmige Mineralmaterial direkt in die Verbrennungskammer aufgegeben wird und in der Flamme in der Verbrennungskammer suspendiert wird.

7. Verfahren nach einem der vorangehenden Ansprüche, wobei die in Abfall gebundene Mineralwolle ein Harnstoffharz als Bindemittel umfasst.

8. Verfahren nach einem der vorangehenden Ansprüche, wobei es sich bei den Mineralfasern um Steinfasern mit einer Oxidgewichtsanalyse von unter 10 % Na₂O + K₂O, über 20 % CaO + MgO, über 3 % Eisen, gemessen als FeO, und unter 50 % SiO₂ handelt.

9. Verfahren nach einem der vorangehenden Ansprüche, wobei die genannten Abgase bei einer Temperatur in die Zyklon-Vorheizvorrichtung eintreten, die niedriger ist als die Temperatur zu der Zeit, zu der sie von der genannten Mineralschmelze getrennt werden, und wobei diese niedrigere Temperatur im Bereich von 1000 bis 1500 °C liegt.

10. Verfahren nach Anspruch 9, wobei die Senkung der Temperatur der Abgase von der ersten Temperatur zur niedrigeren Temperatur durch Verdünnen der genannten Abgase mit Luft und/oder flüssigem Ammoniak bewirkt wird.

11. Vorrichtung, die zum Durchführen des Verfahrens nach einem der vorangehenden Ansprüche geeignet ist und Folgendes umfasst:
Mittel (1, 2, 3, 24, 30) zum Suspendieren von pulverisiertem kohlenstoffhaltigem Brennstoff in vorgeheizter Verbrennungsluft und Verbrennen des suspendierten kohlenstoffhaltigen Brennstoffs, um eine Flamme zu bilden,
Mittel (7, 26, 27) zum Suspendieren von partikelförmigen Mineralmaterial, das auf mindestens 700 °C vorgeheizt wurde, in der Flamme,
Mittel zum Einschließen von in Abfall gebundener Mineralwolle in dem partikelförmigen Mineralmaterial,
eine Zirkulations-Verbrennungskammer (25, 28), in der das Schmelzen des partikelförmigen Materials in der Flamme durchgeführt wird, wodurch eine Mineralschmelze und heiße Abgase gebildet werden,
Mittel (8, 28, 9, 10) zum Trennen der heißen Abgase und der Schmelze und zum Auffangen der Schmelze,
Mittel (11, 22) zum Kontaktieren der Abgase von der Schmelze in einer Zyklon-Vorheizvorrichtung (22) unter NOx-reduzierenden Verhältnissen mit dem zu schmelzenden partikelförmigen Mineralmaterial und **dadurch** Reduzieren von NOx in den Abgasen und Vorheizen des partikelförmigen Materials auf mindestens 700 °C,
Mittel (15, 16, 2) zum Bereitstellen der vorgeheizten Verbrennungsluft durch Wärmeaustausch von Luft mit den Abgasen von der Zyklon-Vorheizvorrichtung (22), und
eine Zentrifugal-Zerfaserungsvorrichtung, die dazu positioniert ist, die Schmelze entgegenzunehmen und zu zerfasern.

## Revendications

1. Procédé de fabrication de fibres minérales comprenant :
(I) la fabrication d'un bain minéral par un processus comprenant la fourniture d'un combustible carboné et d'un matériau minéral particulaire et la combustion du combustible formant ainsi un bain minéral et des gaz d'échappement chauds,
la séparation des gaz d'échappement chauds du bain et la collecte du bain, et
(II) l'écoulement d'un courant du bain collecté vers un appareil de fibrage centrifuge et la formation de fibres minérales par fibrage centrifuge du courant de bain, **caractérisé en ce que**
le combustible carboné est réduit en poudre et le processus comprend les étapes de mise en suspension du combustible carboné pulvérulent dans de l'air de combustion préchauffé et la combustion du combustible carboné en suspension afin de former une flamme,
la mise en suspension du matériau minéral particulaire qui a été préchauffé jusqu'à au moins 700 °C dans la flamme et la fusion du matériau minéral dans une chambre de combustion à circulation (25, 28),
la mise en contact des gaz d'échappement du bain dans un préchauffeur cyclonique (22) dans des conditions de réduction d'oxyde d'azote avec le matériau minéral particulaire qui doit être fondu et ainsi la réduction d'oxyde d'azote dans les gaz d'échappement et le préchauffage du matériau particulaire jusqu'à au moins 700 °C, le matériau minéral particulaire comprenant de la laine minérale à déchets agglomérés, et
la fourniture de l'air de combustion préchauffé par échange thermique d'air avec les gaz d'échappement provenant du préchauffeur cyclonique (22).

2. Procédé selon la revendication 1, dans lequel l'atmosphère dans le préchauffeur cyclonique (22) contient de l'oxygène.

3. Procédé selon la revendication 1 ou 2, dans lequel la combustion est effectuée dans des conditions sous-stoechiométriques.

4. Procédé selon l'une quelconque des revendications précédentes, dans lequel la réduction d'oxyde d'azote est effectuée dans le préchauffeur (22) par réaction à une température de 700 °C à 1050 °C.

5. Procédé selon l'une quelconque des revendications précédentes, dans lequel la chambre de combustion à circulation est une chambre de combustion à cyclone conique ayant une sortie axiale pour les gaz d'échappement depuis sa partie supérieure et une entrée pour le combustible pulvérulent et l'air préchauffé, et/ou la flamme, non radialement dans la partie supérieure du cyclone et une sortie pour le bain depuis sa base.

6. Procédé selon l'une quelconque des revendications précédentes, dans lequel le matériau minéral particulaire préchauffé est alimenté directement dans la chambre de combustion et est mis en suspension dans la flamme dans la chambre de combustion.

7. Procédé selon l'une quelconque des revendications précédentes, dans lequel la laine minérale à déchets agglomérés contient une résine urée comme agent agglomérant.

8. Procédé selon l'une quelconque des revendications précédentes, dans lequel les fibres minérales sont des fibres de pierre ayant une analyse en poids d'oxyde de moins de 10 % de Na₂O + K₂O, de plus de 20 % de CaO + MgO, de plus de 3 % de fer mesuré comme FeO et de moins de 50 % de SiO₂.

9. Procédé selon l'une quelconque des revendications précédentes, dans lequel lesdits gaz d'échappement entrent dans le préchauffeur cyclonique à une température inférieure à la température en cours au moment où ils sont séparés dudit bain minéral, cette température moindre étant comprise dans la plage de 1000 à 1500 °C.

10. Procédé selon la revendication 9, dans lequel la réduction de la température des gaz d'échappement de la première température à la température moindre est effectuée par dilution desdits gaz d'échappement avec au moins l'un des éléments d'air et d'ammoniaque.

11. Appareil adapté pour effectuer le procédé selon l'une quelconque des revendications précédentes, comprenant :
des moyens (1, 2, 3, 24, 30) pour mettre en suspension le combustible carboné pulvérulent dans de l'air de combustion préchauffé et brûler le combustible carboné en suspension afin de former une flamme,
des moyens (7, 26, 27) pour mettre en suspension dans la flamme un matériau minéral particulaire qui a été préchauffé à au moins 700 °C,
des moyens pour inclure dans le matériau minéral particulaire de la laine minérale à déchets agglomérés,
une chambre de combustion à circulation (25, 28) dans laquelle la fusion du matériau particulaire dans la flamme est effectuée, formant ainsi un bain minéral et des gaz d'échappement chauds,
des moyens (8, 28, 9, 10) pour séparer les gaz d'échappement chauds et le bain et collecter le bain,
des moyens (11, 22) pour mettre en contact les gaz d'échappement du bain dans un préchauffeur cyclonique (22) dans des conditions de réduction d'oxyde d'azote avec le matériau minéral particulaire qui doit être fondu et ainsi réduire l'oxyde d'azote dans les gaz d'échappement et pour préchauffer le matériau particulaire jusqu'à au moins 700 °C,
des moyens (15, 16, 2) pour fournir de l'air de combustion préchauffé par échange thermique d'air avec les gaz d'échappement provenant du préchauffeur cyclonique (22), et
un appareil de fibrage centrifuge positionné pour recevoir et fibrer le bain.
